(19) Europäisches Patentamt
European Patent Office
Office européen des brevets

(11) Publication number: **0 023 018**
**B1**

(12) **EUROPEAN PATENT SPECIFICATION**

(45) Date of publication of patent specification: **15.01.86**

(51) Int. Cl.$^4$: **C 08 F 10/00,** C 08 F 6/24, C 08 F 6/28

(21) Application number: **80104111.2**

(22) Date of filing: **15.07.80**

(54) **Method of reducing the level of catalyst residues in polymers.**

(30) Priority: **16.07.79 US 58226**

(43) Date of publication of application: **28.01.81 Bulletin 81/04**

(45) Publication of the grant of the patent: **15.01.86 Bulletin 86/03**

(84) Designated Contracting States: **AT BE DE FR IT NL**

(56) References cited:
**FR-A-2 381 791**
**US-A-3 045 002**
**US-A-3 219 647**

(73) Proprietor: **PHILLIPS PETROLEUM COMPANY**
**5th and Keeler**
**Bartlesville Oklahoma 74004 (US)**

(72) Inventor: **Dietz, Richard Ewaldus**
**703 S.E. Delaware**
**Bartlesville Oklahoma (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 023 018 B1

**Description**

This invention relates to the removal of catalyst residues from polymers.

Various polymerization reactions are described in the literature and the polymerizations are usually carried out in the presence of catalysts. One of the problems encountered with polymers prepared by such processes concerns the presence in the polymer of unacceptable levels of catalyst residues or ash-forming ingredients. The "ash content" of a product refers to catalyst constituents which are present in the polymer in unidentified form and which produce ash when the polymer is burned. The presence of these catalyst residues in the polymer adversely affects the color and heat stability of the polymer, as well as its electrical properties.

The ash or catalyst residue in polymers is typically occluded in the polymer particles. To reduce the level of this residue to acceptable levels, a solubilizing or complexing agent must be transported through the polymer to the catalyst. The catalyst is then solubilized and transported out of the polymer particle whence it can be separated from the polymer by filtration or washing. This catalyst removal is preferably carried out without the generation of undesirable side products such as hydrogen halides but if such halides are produced a suitable scavenging system for such halides can also be advantageously employed. The ease with which the purification steps occur is a function of the size, shape, and polarity of the solubilizing agent and of the solubilized catalyst. It is also a function of the catalyst activity.

Various treating methods have been proposed and tried by the prior art for the reduction of the level of such catalyst residues. For example, purification can be by treatment with anhydrous alcohols, alcoholic or aqueous solutions of acids, or complex forming organic compounds with a pretreatment in the presence of an alkylene oxide as disclosed in US—A—2 974 132. Alternatively, the polyolefin dispersion can be treated with an ether as disclosed in US—A—3 045 002 and US—A—3 083 192. US—A—3 219 647 discloses a combination of a dicarbonyl compound and an alkylene oxide and FR—A—2 381 791 discloses a combination of an epoxide and a monoalkohol having from 3 to 8 carbon atoms.

The present invention relates to a method of reducing the level of catalyst residues in polyolefins prepared by polymerization of 1-olefins and/or conjugated diolefins in the presence of a halogen-containing catalyst system by contacting said polymer with a treating agent comprising in combination an alkylene oxide containing at least one oxirane group of the structure

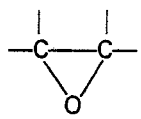

and an alcohol which method is characterized by using as said alcohol an alkyl monoether of a glycol having at least 3 carbon atoms in said alkyl group, wherein the amount of said alkylene oxide is at least 0.5 gram mole per gram atom of total chloride in the catalyst system charged and the amount of said alkyl monoether of a glycol is at least 0.1 gram mole per gram atom of total metal in the catalyst system charged.

The invention is thus applicable to reduction of the level of catalyst residues from polymers prepared in the presence of a catalyst system having at least one halogen atom. In most instances, the halogen atom will be connected to at least one metal atom.

What constitutes an acceptable level of catalyst residues will vary depending on the catalyst system used, the polymerization system employed, and the uses to which the product will be placed. In the polymerization of polypropylene, for example, using titanium trichloride and diethylaluminum chloride (DEAC), it is currently desirable to obtain purified polypropylene having no more than about 25 parts per million (ppm) titanium, about 75 ppm aluminum and no more than about 100 ppm each of ash and chlorides. Titanium is believed to contribute color and chlorides can cause problems in corrosion and stabilization. To achieve these currently desirable levels without a deashing step would require a high activity catalyst. However, this invention is also considered applicable to such high activity catalyst systems if deashing becomes necessary to achieve levels of catalyst residues lower than what is currently considered acceptable, i.e., the invention is not to be considered as limited by what are currently considered acceptable levels of catalyst residues.

The treating agent used for removal of catalyst residues by the method of the present invention includes in combination said alkyl monoether of a glycol and said alkylene oxide. The alkyl monoether of a glycol can comprise alkyl monoethers of glycols, said glycols conforming, for example, to the general formula

$$HO[(CH_2)_rCHR^1O]_sH$$

where $R^1$ is a hydrogen or a methyl group, r is an integer having a value of 1 or 2, and s is an integer having a value of 1, 2, or 3 in addition to glycols such as propylene glycol or dipropylene glycol. Examples of such compounds include ethylene glycol (1,2-ethanediol), diethylene glycol (dihydroxydiethyl ether), triethylene glycol, propylene glycol (1,2-propanediol), and dipropylene glycol (2,2'-dihydroxydipropyl ether).

The alkyl group of the alkyl monoether of a glycol contains at least 3 carbon atoms and can be of a

linear or branched nature. Generally said alkyl group contains from 3 to 8 carbon atoms. In a preferred embodiment, said alkyl group contains from 4 to 8 carbon atoms. Examples of specific compounds include the monobutyl-, mono-2-ethylhexyl- and monooctyl ethers of ethylene glycol and propylene glycol, the monobutyl-, mono-2-ethylbutyl-, mono-2-ethylhexyl-, and monooctyl ethers of dihydroxydiethyl ether (diethylene glycol) and dipropylene-1,2-glycol, and the monobutyl ethers of triethylene glycol. The monoalkyl ethers of dihydroxydiethyl ether (diethylene glycol) are a presently preferred group of compounds with the monobutyl ether of dihydroxydiethyl ether (diethylene glycol) particularly preferred because of its efficacy, stability, and low order of toxicity.

The alkylene oxides used in the present invention are compounds containing at least 2 carbon atoms and preferably containing from 2 to 8 carbon atoms and which include in their molecular structure at least one oxirane group having the structure

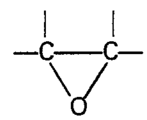

These compounds can be represented by the general formula:

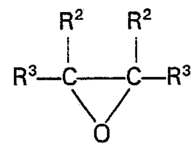

in which each $R^2$ and $R^3$ group can be a hydrogen atom, an alkyl, cycloalkyl, or aryl group, or combinations, e.g., alkylaryl or arylalkyl, or an epoxy-containing cyclic or alicyclic hydrocarbon group; and in which the $R^2$ and/or the $R^3$ groups can be joined to form a carbocyclic group.

Typical compounds of this type include: epoxyethane, 1,2-epoxypropane, 1,2-epoxybutane, 2,3-epoxybutane, 1,2,3,4-diepoxybutane, 1,2,4,5-diepoxypentane, 1,2,4,5,7,8-triepoxyoctane, 2,3-epoxy-2,3-dimethylbutane, 2,3-epoxy-2-methyl-3-ethylpentane, epoxyethylbenzene, epoxyethylcyclohexane, epoxyethyl-3,4-epoxycyclohexane, 1,2-epoxycyclohexane, 2,3-epoxyethylcyclohexane and 1,2-epoxycyclopentane.

A particularly preferred compound is 1,2-propylene oxide (epoxypropane) hereinafter sometimes referred to as propylene oxide.

The present invention is particularly advantageous for removal of catalyst residues originating from a catalyst system which is also effective for the polymerization of the alkylene oxide.

The amount of alkyl monoether of a glycol used is at least 0.1 gram mole per gram atom of total metal in the catalyst system charged and can generally range from 0.1 to 15 gram moles per gram atoms of total metal in the catalyst system charged. Excellent results have been obtained when the alkyl monoether of a glycol is present in a range from 1.5 to 6 gram moles per gram atoms of total metal and more preferably in the range from 1.5 to 4 gram moles per gram atoms of total metal. The amount of alkylene oxide is at least 0.5 gram mole per gram atom of total chloride in the catalyst system charged and can range generally from 0.5 to 20 gram moles per gram atom of halogen in the catalyst system charged. Excellent results have been obtained when the alkylene oxide is in the range of 1 to 3 moles per gram atom of chloride and more preferably from 1.5 to 2.5 moles per gram atom of chloride and these ranges are preferred for economy. When an alkyl monoether of a glycol and an alkylene oxide are used in combination the ratio of alkyl monoether of a glycol to alkylene oxide (calculated as the ratio of moles of the alkyl monoether employed per gram atom of total metal in the catalyst system charged to moles of alkylene oxide employed per gram atom of halide in the catalyst system charged) can range generally from 0.1:1 to 10:1. More preferably, the ratio of the alkyl monoether to the alkylene oxide is in the range of 0.1:1 to 4:1 and most preferably in the range of 0.2:1 to 3:1 or 1:1 to 3:1 for excellent reduction of residual levels of ash and titanium. The alkyl monoether and/or the alkylene oxide can be introduced directly by themselves into the contactor or contact zone, or they can be added separately, or in combination in solution in an inert hydrocarbon.

The alkylene oxide is not a necessary component of a purification system if the sole and only object is to remove catalyst residues. However, in the combination of the present invention, the alkylene oxides are included to scavenge hydrogen halide formed in the reaction between metal halides and the alkyl monoether to minimize corrosion and other problems. Similarly, the alkyl monoether is not a necessary component of a purification system if the sole and only object is to remove catalyst residues. However, in the combination of the present invention, the monoalkyl ethers as herein described are included to inhibit the undesirable formation of *poly*alkylene oxides which can cause plugging problems in the monomer recovery system or cause an increase in the level of the *poly*-alkylene oxides in the polymer product which can alter the polymer properties or processing.

The polymers which are treated in accordance with the present process are prepared from 1-olefins and/or conjugated diolefins. The present invention is particularly applicable to the treatment of polymers

which are prepared by polymerizing 1-olefins because such polymerization systems often employ catalysts having at least one halide atom. Preferably, the 1-olefins most often used contain from 2 to 20 carbon atoms. Examples of such monomers include ethylene, propylene, 1-butene, 1-pentene, 3-methyl-1-butene, 1-hexene, 1-heptene, 1-octene, 4-methyl-1-pentene, 3-methyl-1-hexene, 1,3-butadiene, isoprene, 2,3-dimethyl butadiene, 2-methoxybutadiene, 1-eicosene, 4-ethyl-1-octadecene, 6-methyl-1-dodecene, 1,3-eicosadiene, 4,6-diethyl-1,3-decadiene, 4,5-dimethyl-1-cotene and 1-hexadecene. This invention is particularly applicable to the treatment of polypropylene to remove catalyst residues. The polymers contemplated include homopolymers, copolymers and terpolymers. Representative polymers include polyethylene, polypropylene, poly(4-methyl-1-pentene), ethylene/propylene copolymers, ethylene/1-hexene copolymers, ethylene/1-decene copolymers and ethylene/1-butene/1,3-butadiene terpolymers. The invention is particularly applicable to the removal of catalyst residues from polypropylene and copolymers of propylene containing up to about 20 mole percent of ethylene or a higher 1-olefin.

This invention is applicable to the treatment of polymers prepared by the use of a halogen-containing catalyst effective for polymerization of 1-olefins and/or conjugated diolefins. Frequently, such catalyst compositions include two or more components, for example, one of which may be a compound of a metal selected from Groups IV, V, VI, and VIII of the Periodic Table according to Mendeleev, and the second component being selected from organometal compounds, metal hydrides, and metals of Groups I, II, and III of the Periodic Table. Numerous examples of the catalyst compositions are well known in the art.

The compounds of a metal of Groups IV, V, VI, and VIII of the Periodic System include, for example, the oxides, hydrides, halides, oxyhalides and salts of organic acids, usually having twenty or less carbon atoms, such as formic acid, of the said groups of metals, such as titanium, zirconium, chromium, thorium, molybdenum and vanadium.

The compounds of a metal of Group IV of the Periodic System which can be employed can conform, for example, to the formula $MX_n(OR)_m$, where the sum m+n equals the valence of the metal M, X is a halogen, and R is an organic radical usually having twenty or less carbon atoms, and preferably being an alkyl, cycloalkyl or aryl group or combinations, e.g., alkaryl and arylalkyl. Specific examples of such compounds are titanium tetrabutoxide (tetra-n-butyl titanate), tetra-sec-butyl titanate, tetraisopropyl titanate, tetra-2-ethylbutyl titanate, tetra-2-ethylhexyl titanate, tetrastearyl titanate, tetraethyl titanate, tetra(chloroethyl)titanate, tetra-m-tolyl titanate, tetraallyl titanate, tetracyclohexenyl titanate, tetracyclopentyl titanate, tetraethyl zirconate, tetramethyl zirconate, tetraisopropyl zirconate, tetraamyl zirconate, dichloro diethyl titanate ($Cl_2Ti(OC_2H_5)_2$) monochloro-triethyl titanate ($ClTi(OC_2H_5)_3$) and the dichloro-diethyl zirconate ($Cl_2Zr(OC_2H_5)$). Also included are such compounds as $Hf(OCH_3)_4$, $Th(OC_3H_7)_4$, $Th(OC_6H_5)_4$, $Cl_3Ti(OC_6H_4CH_3)$, $Zr(OC_4H_7)_4$, $Cl_2Hf(OC_{10}H_{21})_2$, $Th(OC_6H_{13})_4$, and $Zr(OC_{12}H_{25})_4$.

Of particular interest are such catalysts employing a titanium compound. The titanium compound can be expressed, for example, as $TiX_p(OR)_{4-p}$ in which R is (as above) a hydrocarbon group containing from 1 to 20 carbon atoms such as alkyl, cycloalkyl, aryl, and combinations, e.g., alkaryl and arylalkyl, X is a halogen usually chlorine or bromine, and p is an integer in the range of 0 to 4 inclusive, provided that when p is zero at least one other component of the catalyst system has at least one halogen atom. Examples of specific compounds include titanium tetrachloride, titanium tetramethoxide, titanium tetracyclohexyloxide, titanium tetrabenzyloxide, titanium chlorotrimethoxide, titanium dichlorodiethoxide, and titanium tribromo-n-butoxide, and mixtures.

Another suitable titanium compound is titanium trichloride which can be prepared by reduction of titanium tetrachloride with hydrogen, aluminum, or an organometal compound such as diethylaluminum chloride. One commercially available titanium trichloride of interest is produced by aluminum reduction of the tetrachloride and is a complex generally expressed as $TiCl_3 . 1/3\ AlCl_3$ or $3TiCl_3 . AlCl_3$ hereinafter expressed as $3TiCl_3 . AlCl_3$.

Some examples of the second component which can be employed with the metal compounds described above include trimethylaluminum, triethylaluminum, triisobutylaluminum, tri-n-butylaluminum, tri-n-pentylaluminum, triisooctylaluminum, tri-n-dodecylaluminum, triphenylaluminum, triethylgallium, triphenylgallium, tricyclohexylgallium, tri-n-butylindium, triethylthallium, diethylaluminum hydride, methylaluminum dichloride, dimethylaluminum chloride, ethylaluminum dichloride, dimethylaluminum chloride, di-n-butylaluminum bromide, isooctylaluminum diiodide, di-n-propylgallium fluoride, eicosylgallium dibromide, ditetradecylgallium fluoride, dicyclohexylgallium chloride, diphenylgallium bromide, diphenylindium chloride, dioctylindium fluoride, cyclohexylindium dibromide, 3-methylcyclohexylaluminum dichloride, 2-cyclohexylethylgallium dichloride, p-tolylberyllium iodide, di(3-phenyl-1-methylpropyl)indium fluoride and 2-(3-isopropylcyclohexyl)ethylthallium dibromide.

Some of the metal hydrides useful as the second component can include, as specific examples, aluminum hydride, lithium aluminum hydride, barium hydride, gallium hydride, indium hydride, sodium aluminum hydride, potassium beryllium hydride.

The metals of the first, second and third groups useful in the second component are applicable as a class, the most important members being sodium, magnesium and aluminum.

Of particular interest because of availability and efficacy are organoaluminum compounds which can be expressed as $AlR_bY_{3-b}$ in which R is as above, Y is a monovalent radical selected from among the halogens and hydrogen, and b is an integer of 0 to 3. Examples of specific compounds include trimethylaluminum, tridodecylaluminum, tricyclohexylaluminum, triphenylaluminum, tribenzylaluminum,

diethylaluminum chloride, ethylaluminum dichloride, isopropylaluminum dibromide and diisobutylaluminum hydride, and mixtures thereof.

A third catalyst component which can be used advantageously with the first and second components described above is an organic halide or metal halide where the organic radical is advantageously an alkyl, cycloalkyl or aryl group. In a preferred embodiment, the organic radical has thirty or fewer carbon atoms. Specific examples are ethyl bromide, ethyl trichloro titanium, 1-bromobenzene, cyclohexyl chloride. Also applicable are an alkali metal or ammonium halide, an aluminum halide (where the catalyst also includes another metal compound such as a titanium compound), a halogen, a hydrogen halide, a complex hydride, a mixture of an organic halide and a metal, and Grignard reagent.

A still more specific subgroup of catalysts where excellent color and low ash content are obtained by the practice of the invention include catalysts where an organometal compound is used in combination with a metal salt. The ratios of the catalyst compounds in a catalyst system can vary widely, depending upon the particular charge used and operating conditions, say from 0.02 to 50 mole of the first component per mol of the second catalyst component. If a third component is present, the amount can vary from 0.02 to 50 mols per mol of the second component.

Examples of some suitable catalyst systems in accordance with the foregoing disclosure are as follows:

(a) Aluminum trialkyls, e.g., triethylaluminum or triisobutylaluminum and the tetravalent metal halides of the type represented by titanium tetrachloride;

(b) An organic halide (such as ethyl bromide), a Group IV inorganic halide (such as titanium tetrachloride), and a low valence metal selected from the group consisting of alkali metals, beryllium, magnesium, zinc, cadmium, mercury, aluminum, gallium, indium and thallium, for example, magnesium, ethyl bromide and titanium tetrachloride, as such, or with the addition of metallic aluminum;

(c) A Group IV halide, for example, titanium tetrachloride, and a low valence metal identified in (b), for example, sodium or magnesium;

(d) A mixture of titanium hydride and an aluminum alkyl halide, i.e., a mixture of titanium hydride and ethylaluminum sesquichloride;

(e) An organoaluminum halide such as diethylaluminum chloride and a trivalent metal halide such as titanium trichloride;

(f) A mixture of molybdenum pentachloride and organometal compounds and halides exemplified by triethylaluminum and ethylaluminum dichloride;

(g) A mixture of complex metal halides, exemplified by potassium fluotitanate, and an organometal compound and halides exemplified by triethylaluminum and diethylaluminum chloride;

(h) A mixture of a derivative selected from the oxides of molybdenum, alkali metal and ammonium molybdates, and an organometal halide exemplified by isobutylaluminum dichloride;

(i) A mixture of: a derivative of iridium, platinum and osmium selected from the group consisting of halides, oxides and complex compounds of iridium, platinum and osmium, said complex compounds corresponding to the formula $M'_xM''X_y$, wherein M' is an alkali metal or an ammonium radical, M'' is iridium, platinum or osmium, X is a halogen, and y is at least 1 and the sum of x and y is equal to the valance of M'', and a metallic organic compound exemplified by triethylaluminum, for example, iridium chloride and triethylaluminum or ethylaluminum sesquichloride;

(j) A mixture of a derivative of a metal selected from the group consisting of halides, oxyhalides, hydroxyhalides, oxyhydroxyhalides of a metal selected from the group consisting of molybdenum, tungsten, uranium, selenium, and tellurium, and complex salts of said halides and said oxyhalides with a member selected from the group consisting of halides of sodium, potassium, lithium, rubidium, cesium and ammonia and an organometal compound exemplified by triethylaluminum, for example, molybdenum pentachloride and ethylaluminum dichloride;

(k) A chromyl halide and at least one of the following (1) a metal hydride or an organometal compound, (2) an organometal halide and (3) a mixture of an organic halide and a metal, for example, chromyl chloride, ethyl bromide -and magnesium;

(l) A titanium derivative, a complex hydride, and a halide of aluminum; for example, tetrabutyl titanate, lithium aluminum hydride, and aluminum chloride;

(m) At least one halide of titanium, zirconium or hafnium and at least one hydride of lithium, sodium, potassium, rubidium, cesium, magnesium, calcium, strontium, barium, lanthanum or thorium, for example, zirconium tetrachloride and calcium hydride;

(n) (1) A hydrocarbon derivative of one of the metals, zinc, cadmium, mercury, and magnesium and (2) a member selected from the group consisting of halides of titanium, zirconium, vanadium and molybdenum, oxyhalides of titanium, zirconium, vanadium, molybdenum and chromium, and complex salts of said halides and oxyhalides with a number selected from the group consisting of halides of the alkali metals and ammonia, for example, diethylzinc and titanium tetrachloride;

(o) (1) A tri- or tetrahalide of titanium, zirconium, hafnium and germanium, (2) an organophosphorus-containing compound and (3) at least one of the following (a) an organometal halide, (b) a mixture of an organic halide and a metal, and (c) a complex hydride, for example, triethylaluminum, titanium tetrachloride and a triphenyl phosphine;

(p) (1) A tri- or tetrahalide or titanium, zirconium, hafnium and germanium, (2) a peroxide of the

formula R''OOR'' where R'' is hydrogen, alkyl, aralkyl, alkaryl, cycloalkyl, acyl, alkyne, or aryl, and (3) at least one of the following: (a) an organometal halide, (b) a mixture of an organic halide and a metal and (c) a complex hydride, for example, ethylaluminum sesquichloride, titanium tetrachloride and benzoyl peroxide;

(q) A tri- or tetrahalide of titanium, zirconium, hafnium and germanium, a metal alkoxide and at least one of the following: (1) an organometal halide, (2) a mixture of an organic halide and a metal, and (3) a complex hydride, for example, ethylaluminum sesquichloride, aluminum ethylate and titanium tetrachloride;

(r) (1) A halide of titanium, zirconium, hafnium or germanium, (2) a hydride selected from the group consisting of hydrides of aluminum, gallium, indium and thallium and complexes of said hydrides with alkali metal hydrides, and (3) an organic halide, for example, titanium tetrachloride, lithium aluminum hydride and ethyl bromide;

(s) (1) A halide of titanium, zirconium, hafnium, or germanium, (2) carbides and acetylenic compounds and (3) at least one of the following: (a) an organometal halide, (b) a mixture of an organic halide and a free metal, and (c) a complex hydride, for example, ethylaluminum sesquichloride, titanium tetrachloride and copper acetylide.

One catalyst system which is preferred for use in the polymerization comprises a dialkylaluminum chloride and titanium trichloride, the latter compound preferably being prepared by reduction of titanium tetrachloride with aluminum. The reduction product thus prepared is a complex having the approximate formula $3TiCl_3 . AlCl_3$. The reduction reaction can be carried out at an elevated temperature for example, at a temperature in the range of 360 to 600°F (182—316°C), preferably from 375 to 450°F (191—232°C).

The amount of catalyst employed which is effective for polymerization can vary over a rather wide range and will depend at least to a certain degree upon the particular catalyst system utilized. However, the determination of the actual amount of the catalyst employed in any particular polymerization is well within the skill of the art. In general, the mole ratio of the organometal compound to the metal halide falls within the range of 0.02 to 50.

Although not essential, it is often desirable to carry out the polymerization in the presence of elemental hydrogen, for example, to control the molecular weight of the product.

In the preparation of polymers of monoolefins, a presently preferred procedure involves conducting the reaction in the presence of a catalyst comprising an alkylaluminum halide and a titanium trihalide, the temperature being maintained at a level such that the polymer is formed as a finely divided solid. The reaction is conducted in a suitable reaction diluent. While various hydrocarbons can be used as diluents, it is generally preferred that the polymerization be conducted as a mass operation in which the unreacted monomer acts as the diluent. By whatever means the polymerization is conducted, conditions are preferably maintained such that the polymer is formed and recovered as a finely divided solid (particle form process). However, it is within the scope of the invention to be employed in conjunction with other polymerization processes such as liquid phase or gaseous phase processes.

In the preferred practice of the invention the polymer is dispersed in solid state in a hydrocarbon diluent and treated in such dispersion, preferably under conditions such that the diluent remains in the liquid phase. In many instances it is convenient to conduct the polymerization using the liquid monomer as the reaction diluent under conditions to provide a pulverulent solid polymer and treat the polymer for removal of catalyst in this diluent after termination of the polymerization. However, it is within the scope of the invention to replace the unreacted liquid monomer after polymerization has been terminated with another hydrocarbon material and conduct the extraction step therein. Other suitable hydrocarbon diluents include paraffinic and aromatic hydrocarbons in which a catalyst-deashing agent complex is sufficiently soluble for effective deashing. Generally, paraffinic hydrocarbons, for example those containing from such as 3 to such as 7 carbon atoms per molecule, such as pentane, heptane, and mixtures thereof, can be used. In any case it is important to prevent contact of the system with air, water, or moisture prior to and during the extraction step. Extraction will be conducted in a temperature range and for a period of time effective to reduce the undesired impurities to an acceptable level without causing the polymer to be degraded. The time will vary with temperature, degree of mixing, etc., but will generally be from one minute to several hours, preferably 10 to 100 minutes.

The resulting polymer slurry may then be passed to a filter, wherein the treated solid polymer is separated from the diluent which now contains the catalyst residues. To remove any adhering liquid, the polymer is washed on the filter, removed, and dried.

In a preferred embodiment of the present invention, a polymer slurry which has been treated according to the present invention to extract catalyst residues then passes to a washing step wherein the solid polymer undergoes further purification comprising contacting the polymer particles countercurrently with a washing hydrocarbon which is maintained in the liquid phase, preferably the same olefin used in the polymerization. Various hydrocarbons such as aromatic and paraffinic hydrocarbons in which a catalyst-deashing agent complex is sufficiently soluble for effective washing can be used. Generally, paraffinic hydrocarbons, for example, those containing from such as 3 to such as 7 carbon atoms per molecule, such as pentane, heptane, and mixtures thereof, can be advantageously employed as the wash liquid, although, as stated, it is preferred to utilize the monomer in liquid phase for this purpose.

The treated effluent is removed from the treating zone to the washing zone for the purification step just

described. The overhead or by-product stream recovered from the washing zone contains monomer, soluble polymers, catalyst residues and a small amount of solid polymer. This stream can be separated into its various components if desired and the purified monomer recycled. The bottom or product stream from the washing zone comprises a solid polymer substantially free of catalyst residues.

The present invention is particularly applicable to polymers such as polypropylenes, prepared by polymerization of propylene in the presence of a catalyst system comprising a complex of titanium trichloride represented by the approximate formula $3TiCl_3 . AlCl_3$ together with diethylaluminum chloride, the polymerization being carried out at a temperature in the range between 100 and 180°F (38—82°C). While not essential, it is frequently desirable to conduct the polymerization in the presence of elemental hydrogen charged to the reactor prior to or in combination with the monomer charge.

While the method of this invention is particularly useful in treating dispersions of solid polymers to remove catalyst residues, it can also be employed to advantage to treat polymers in solution. In many polymerization systems, the reactor effluent comprises polymer in solution in a hydrocarbon solvent. Such a solution can be passed to a treating vessel wherein the extracting agent of this invention is added. The contact time is for a period effective to reduce the catalyst residues in the recovered polymer to an acceptable level, which may be from a few minutes up to several hours.

The polymer is separated from the liquid phase and can be further purified, if desired, by washing.

A more comprehensive understanding of the invention can be obtained by referring to the following illustrative examples which are not intended, however, to be unduly limitative of the invention.

Example I

Propylene was polymerized in a 3.8 liter stirred stainless steel reactor in liquid propylene at 70°C for 1 hour by employing a commercially available $3TiCl_3 . AlCl_3$ complex as catalyst, diethylaluminum chloride (DEAC) as cocatalyst (4.78 mmoles), and molecular hydrogen to control molecular weight of the product.

The reactor was conditioned for each run by charging it with 3 liters of n-heptane, heating the closed reactor at 175°C for 30 minutes, draining the n-heptane, purging residual n-heptane with propylene vapor and cooling the reactor to room temperature under propylene pressure.

The conditioned reactor was purged with propylene vapor, the DEAC was charged, followed by the catalyst and the reactor was closed. Hydrogen was then admitted followed by 3 liters of liquid propylene. The mixture was heated to polymerization temperature, 70°C. The reactor was maintained liquid full during polymerization by the addition of liquid propylene as required.

Polymerization was terminated at the end of the desired time although stirring was continued and purification initiated by shutting off the flow of liquid propylene to the reactor and draining a small quantity of liquid propylene from the reactor leaving sufficient room for the purification system. The desired quantity of purification agent was flushed into the reactor with liquid propylene. Purification temperature was 70°C. After the desired time the reactor was cooled to about 25°C and the solubilized catalyst residues flushed from the reactor with fresh propylene. Finally the reactor was drained and the polymer recovered for determination of residual ash and titanium content. Ash was determined by burning a weighed amount of polymer and titanium was determined by X-ray fluorescence.

The purification compounds employed and the results obtained are given in Table I. The following abbreviations are used.

"PO" is propylene oxide

"MC" is monomethyl ether of diethylene glycol (methyl carbitol)

"EC" is monoethyl ether of diethylene glycol (ethyl carbitol)

"BC" is monobutyl ether of diethylene glycol (butyl carbitol)

"Productivity, g/g" is grams polymer per gram catalyst per hour

TABLE I
Purification of polypropylene

| Run No.[a] | Purification system: Compound | Mole ratio[b] | BC/PO | Time min. | Mole ratio BC/PO | Cat. wt. g | Calc. mole ratio DEAC $TiCl_3$ | Polymer: Yield g | Residue ppm: Ash | Residue ppm: Ti | Percent removal: Ash[c] | Percent removal: Ti | Cat. prod. g/g/hr |
|---|---|---|---|---|---|---|---|---|---|---|---|---|---|
| 1(C) | none | — | — | — | — | 0.1008 | 9.4 | 149 | 1460 | 161 | — | — | 1480 |
| 2(C) | MC | 7.8 | — | 45 | — | 0.1115 | 8.5 | 159 | 1320 | 175 | — | — | 1430 |
| 3(C) | " | 16 | — | 90 | — | 0.1054 | 9.0 | 150 | 1520 | 170 | — | — | 1420 |
| 4(C) | EC | 6.8 | — | 45 | — | 0.1015 | 9.4 | 123 | 2090 | 170 | — | — | 1170 |
| 5(C) | " | 13 | — | 90 | — | 0.1086 | 8.7 | 180 | 670 | 95 | 54 | 45 | 1660 |
| 6(C) | BC | 5.3 | — | 45 | — | 0.1040 | 9.1 | 158 | 160 | 16 | 89 | 90 | 1520 |
| 7(C) | " | 11 | — | 90 | — | 0.1051 | 9.0 | 157 | 250 | 9 | 83 | 95 | 1490 |
| 8(C) | PO | 6.3 | — | 45 | — | 0.1069 | 8.9 | 184 | 130 | 24 | 91 | 86 | 1720 |
| 9(C) | " | 9.6 | — | 90 | — | 0.1161 | 8.2 | 173 | 180 | 24 | 88 | 26 | 1490 |
| 10(C) | " | 10 | — | " | — | 0.1009 | 9.4 | 151 | 250 | 21 | 83 | 88 | 1500 |
| 11(C) | " | 11 | — | " | — | 0.1025 | 9.3 | 169 | 110 | 17 | 92 | 90 | 1650 |
| 12(I) | BC/PO | 11/6.5 | 1.7:1 | " | 1.3 | 0.0979 | 9.7 | 132 | 130 | 25 | 91 | 86 | 1350 |
| 13(I) | " | 11/1.2 | 9.0:1 | " | 6.6 | 0.1167 | 8.1 | 158 | 240 | 11 | 84 | 94 | 1350 |
| 14(I) | " | 11/1.3 | 8.5:1 | " | 6.6 | 0.1170 | 8.9 | 132 | 150 | 11 | 90 | " | 1230 |

[a] C represents a control run; I represents an invention run.
[b] Mole ratio of MC, EC, and BC based on moles per gram atom of total metals; mole ratio of PO based on moles per gram atom of chloride; ratio BC/PO based on moles of BC based on moles per gram atom of total metal to moles of PO based on moles per gram atom of chloride. A dash signifies not applicable.
[c] In these columns, a dash indicates that a value was not determined.
Triphenyl phosphite added as catalyst adjuvant, 15 parts by weight per 100 parts by weight catalyst complex.

As the results of Table I show, when no purification agent is used as in control run 1, a high level of ash (1460 ppm) and high level of titanium (160 ppm) are found in the polymer. Control runs 2—5 indicate that the monomethyl- and monoethyl ethers of diethylene glycol are not effective as purification agents for polypropylene. In contrast, control runs 6 and 7 demonstrate that the monobutyl ether of diethylene glycol (BC) is particularly effective, even alone, in reducing the ash and titanium levels. It must be remembered that corrosive amounts of HCl forms as a product, however. Invention runs 12—14, demonstrate that mixtures of the monobutyl ether of diethylene glycol and propylene oxide provide an excellent purification system. Propylene oxide itself, as control runs 8—11 show, yields good results. However, it must be remembered that polypropylene oxide can be formed which can result in clogged recycle lines.

Example II

The polymerization recipe employed was as follows:

| | |
|---|---|
| n-hexane | 100 milliliters (ml) |
| $3TiCl_3 . AlCl_3$ | 0.4 grams (g) |
| DEAC | 0.909 g (5.0 ml, 25 wt.% in n-heptane) |
| propylene oxide | 16.4 g (20 ml) |
| n-butyl carbitol | 5.2 g (30.6 mmoles), when used |

Into each 10-ounce (295 ml) bottle was charged the n-hexane. After purging the bottles with nitrogen, they were placed in a dry box and the DEAC and catalyst were added. The bottles were brought out, recapped, and the propylene oxide and n-butyl carbitol, if used, added. Each bottle was tumbled at 70°C for 4 hours in a bottle bath. On removal, the contents were poured into weighed aluminum pans to which was added methanol used to rinse out the bottles. No precipitate had formed in any of the bottles and only the control showed an increase in viscosity. Each pan was placed in a hood and the contents allowed to evaporate for 24—48 hours. The pans were then reweighed and the amount of residue determined. The results are shown in Table II.

TABLE II
Preparation of polypropylene oxide (PPO)

| Run No. | Recovered weight, g | Initial weight[a] g | Polymer (PPO) | |
|---|---|---|---|---|
| | | | Weight, g | Yield, % |
| 15 | 3.64 | 1.31 | 2.33 | 14 |
| 16 | 6.86 | 6.51 | 0.35 | 2 |

[a] Catalyst+DEAC+BC (in run 16)

These data show that polypropylene oxide can be formed by contact with the catalyst system employed in polymerizing propylene and which can be present in the reactor effluent slurry treated with the purification system. Run 16 indicates that the presence of the monobutyl ether of diethylene glycol substantially reduces the formation of polypropylene oxide since only one-seventh (1/7) as much polymer formed as in control run 15 in the absence of the ether alcohol.

Example III

Propylene was polymerized in liquid propylene in a continuous fashion by employing as the reactor a 15.2 cm diameter stainless steel pipe loop having a volume of 98.4 liters. The contents were continuously circulated by means of a pump. Catalyst was intermittently added in pulses (about 60/minute) and effluent intermittently taken off during each run. The catalyst consisted of $3TiCl_3 . AlCl_3$ of the type used in Example I and the cocatalyst was DEAC as a 25 wt.% solution in n-hexane. The concentration of DEAC varied from about 280 to 460 ppm based on the reactor contents as the mole ratio of DEAC to $TiCl_3$ was varied from about 3.2:1 to about 5.2:1. Triphenyl phosphite was added as a reactor adjuvant and molecular hydrogen was employed to control molecular weight of the polypropylene produced. The average residence time during polymerization was 1.8 hours, the reactor temperature was 79°C, the propylene feed rate to the reactor was 48.8 liters/hour, and at steady state conditions the reactor was operated to provide 40 wt.% solids throughout all runs.

The reactor effluent was passed to the bottom of a 3-stage contactor column having a capacity of 58.6

liters and operated so that the upper stage was at 74°C, the middle stage was at 77°C, and bottom stage was at 78°C.

Deashing chemicals tested included n-butyl carbitol (BC) alone, propylene oxide (PO) alone, and a combination of the two. In these purification systems, one equivalent of the chemical used for Ti and Al removal is considered to be 3 moles of chemical per mole of combined Ti and Al compounds present. One equivalent of the chemical used for chloride scavenging (propylene oxide) is considered to be one mole of chemical per mole of chloride present. Unless specified to the contrary, the chemical was added to the bottom (first) stage of the contactor.

The slurry leaving the contactor was then passed to a 15.2 cm diameter wash column where the catalyst residues solubilized in the contactor were washed from the slurry by a counter current flow of propylene at a temperature of 33°C and a rate of 1.6 kg liquid wash propylene per kg of polypropylene contained in the slurry. The top of the wash column was maintained at 63°C.

Polypropylene was recovered from the washed slurry leaving the wash column and stabilized with 0.0005 kg of 2,6-di-t-butyl-4-methylphenol per kg of polymer. The amount of ash and titanium in ppm of each polymer was determined as described in Example I.

The polymerization and contactor conditions employed and the results obtained are given in Table III.

TABLE III
Polymerization and purification of polypropylene

| Run No.[a] | Mole ratio DEAC TiCl3 | DEAC ppm | $H_2$ mole % | Purification system (mole ratios) | | | Contactor PO | | $H_2O$ in $C_3$ wash ppm | Cat. prod. g/g[e] | Polymer prod. | | |
|---|---|---|---|---|---|---|---|---|---|---|---|---|---|
| | | | | PO[b] | BC[c] | BC/PO[d] | Input wt.% | Output wt.% | | | Melt flow | Ash ppm | Ti ppm |
| 17(C) | 3.99 | 424 | 0.10 | 7.0 | 0 | — | 0.47 | 0.14 | 30 | 2090 | 3.8 | 205 | 38 |
| 18(C) | 4.28 | 419 | .08 | 7.2 | 0 | — | .47 | .07 | 30 | 2430 | 1.5 | 320 | 52 |
| 19(C) | 4.27 | 400 | .11 | 16 | 0 | — | .94 | .50 | 30 | 2590 | 3.9 | 175 | 27 |
| 20(C) | 4.19 | 426 | .11 | 15 | 0 | — | .94 | .74 | <1 | 2390 | 4.6 | 133 | 22 |
| 21(I) | 4.43 | 422 | .11 | 7.7 | 1.8 | 0.23 | .47 | .14 | 2.5 | 2190 | 5.5 | 100 | 15 |
| 22(I) | 4.90 | 458 | .11 | 13 | 3.7 | 0.28 | .94 | .35 | 2.5 | 2360 | 6.6 | 85 | 14 |
| 23(I) | 4.59 | 427 | .08 | 1.7 | 3.9 | 2.3 | .10 | .02 | 5 | 2540 | 4.0 | 120 | 16 |
| 24(I) | 4.43 | 415 | .08 | 1.7 | 3.9 | 2.3 | .10 | <.01 | 2 | 2490 | 1.7 | 60 | 13 |
| 25(I) | 5.17 | 436 | .08 | 1.7 | 2.1 | 1.2 | .06 | <.01 | 2 | 2690 | 1.9 | 90 | 14 |
| 26(I) | 4.79 | 408 | .08 | 1.7 | 3.6 | 2.1 | .08 | <.01 | 2 | 2490 | 1.8 | 85 | 10 |
| 27(I) | 3.18 | 281 | .08 | 2.0 | 6.0 | 3 | .10 | <.01 | 2 | 2620 | 1.7 | 90 | 12 |
| 28(I) | 3.30 | 290 | 1.21 | 2.0 | 6.0 | 3 | .10 | <.01 | 1.5 | 2510 | 4.9 | 80 | 12 |

[a] C represents a control run; I represents an invention run.
[b] Mole ratio based on moles per gram atom of chloride.
[c] Mole ratio based on moles per gram atom of total metals.
[d] Mole ratio with BC based on total metals, i.e. Ti and Al, and PO based on chloride.
[e] Productivity based on gram polymer per gram $TiCl_3$ per hour.
[f] BC to bottom stage of contactor, PO to top stage of contactor.
The triphenyl phosphite to $TiCl_3$ mole ratio was 0.15 to 1 for runs 17—22 and 0.20 to 1 for runs 23—28.

The results of control runs 17—20 indicate that propylene oxide is a fairly efficient purification agent when used alone, particularly, if low levels of water are present in the wash propylene (note run 20 vs. runs 17—19). Although no polypropylene oxide was detected in either the slurry leaving the contactor or in the recovered polypropylene in these tests it must be remembered that it was formed in tests with the commercial unit and that its presence resulted in line plugging problems.

The results of invention runs 21—28 indicate that the BC/PO system is effective in catalyst deashing. The results of run 24 shows that feeding BC to stage one of the contactor and PO to stage 3 of the contactor is no more effective than feeding both agents to stage one. The amount of titanium in the product is consistently low even when less than one equivalent (3 moles) of the monobutyl ether of diethylene glycol (BC) is used per mole of aluminum and titanium present in the reactor effluent. In terms of mole ratios of BC to PO (defined as the ratio of the moles of monobutyl ether to gram atoms of total metal in the catalyst charged to moles of propylene oxide per mole of chloride in the catalyst charged), invention runs 21—28 show that excellent reduction of ash and titanium is achieved from about 0.2:1 to about 3:1. Ash content in run 23 was higher than expected for no apparent reason.

A comparison of runs 24 to 28 of Example III to runs 12 to 14 of Example I indicate that addition of relatively large amounts of butyl carbitol in runs 12 to 14 was no more effective than the relatively smaller amounts employed in runs 24 to 28. Accordingly, amounts in ranges indicated by runs 24 to 28 are presently preferred, although amounts and ratios outside those ranges are also functional.

## Claims

1. A method of reducing the level of catalyst residues in polyolefins prepared by polymerization of 1-olefins and/or conjugated diolefins in the presence of a halogen-containing catalyst system by contacting said polymer with a treating agent comprising in combination an alkylene oxide containing at least one oxirane group of the structure

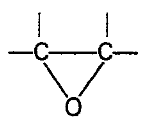

and an alcohol, characterized by using as said alcohol an alkyl monoether of a glycol having at least 3 carbon atoms in said alkyl group, wherein the amount of said alkylene oxide is at least 0.5 gram-mole per gram atom of total chloride in the catalyst system charged and the amount of said alkyl monoether of a glycol is at least 0.1 gram mole per gram atom of total metal in the catalyst system charged.

2. The method of claim 1 characterized in that said glycol is represented by the general formula

$$HO[(CH_2)_rCHR^1O]_sH$$

wherein $R^1$ is a hydrogen or a methyl group, r is an integer having a value of 1 or 2, and s is an integer having a value of 1, 2, or 3.

3. The method of claim 1 characterized in that said glycol is selected from ethylene glycol, diethylene glycol, triethylene glycol, propylene glycol, and dipropylene glycol, said alkyl monoether contains from 4 to 8 carbon atoms and is of a linear or a branched nature, and said alkylene oxide has from 2 to 8 carbon atoms and is represented by the general formula

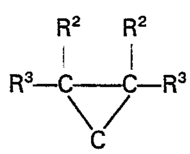

in which each $R^2$ and $R^3$ is a hydrogen atom, an alkyl, cycloalkyl, or aryl group, or combination thereof, or an epoxy-containing cyclic or alicyclic hydrocarbon group, and in which the $R^2$ and/or the $R^3$ groups can be joined to form a carbocyclic group.

4. The method of claim 1 characterized in that said alkyl monoether of a glycol is selected from monobutyl-, mono-2-ethyl-hexyl-, and monooctyl ethers of ethylene glycol and propylene glycol, the monobutyl-, mono-2-ethylbutyl-, mono-2-ethylhexyl-, and monooctyl ethers of dihydroxydiethyl ether (diethylene glycol) and dipropylene-1,2-glycol, and the monobutyl ethers of triethylene glycol.

5. The method of claim 1 characterized in that said alkyl monoether is a monoalkyl ether of diethylene glycol.

6. The method of claim 1 characterized in that said alkyl monoether is the monobutyl ether of diethylene glycol.

7. The method of claim 1 characterized in that said alkylene oxide is selected from epoxyethane, 1,2-epoxypropane, 1,2-epoxybutane, 2,3-epoxybutane, 1,2,3,4-diepoxybutane, 1,2,4,5-diepoxypentane,

1,2,4,5,7,8-triepoxyoctane, 2,3-epoxy-2,3-dimethylbutane, 2,3-epoxy-2-methyl-3-ethylpentane, epoxyethylbenzene, epoxyethylcyclohexane, epoxyethyl-3,4-epoxycyclohexane, 1,2-epoxycyclohexane, 2,3-epoxyethylcyclohexane, and 1,2-epoxycyclopentane.

8. The method of claim 6 characterized in that said alkylene oxide is 1,2-epoxypropane.

9. The method of any of claims 1 to 8 characterized in that said alkyl monoether is present in an amount from 0.1 to 15 gram moles per gram atom of total metal in said catalyst system, said alkylene oxide is present in an amount from 0.5 to 20 gram moles per gram atom of halogen in said catalyst system, and said alkyl monoether of a glycol has a ratio relative to said alkylene oxide in the range of 0.1:1 to 10:2 wherein said ratio is calculated as the ratio of moles of said alkyl monoether employed per gram atom of total metal in said catalyst system charged to moles of said alkylene oxide employed per gram atom of halide in said catalyst system charged.

10. The method of claim 9 characterized in that said alkyl monoether is present in an amount from 1.5 to 6 gram moles per gram atom of total metal in said catalyst system.

11. The method of claim 9 characterized in that said alkyl monoether of a glycol has a mole ratio relative to said alkylene oxide in the range from 0.1:1 to 4:1.

12. The method of claim 9 characterized in that said alkyl monoether of a glycol has a mole ratio relative to said alkylene oxide in the range from 0.2:1 to 3:1.

13. The method of any of claims 1 to 12 characterized by first dispersing said polyolefin as a finely divided solid in a hydrocarbon diluent selected from said at least one monomer under conditions such that said hydrocarbon diluent is in liquid phase, then contacting the thus dispersed polyolefin with said treating agent and, finally, separating the purified polyolefin from the slurry to obtain finely divided polyolefin particles.

14. The method of claim 13 characterized by washing said finely divided polyolefin particles by contacting same in countercurrent flow with a washing hydrocarbon in which a complex formed from said treating agent and catalyst residues is soluble, and recovering the washed polyolefin.

15. The method of claim 14 characterized in that said washing hydrocarbon comprises a hydrocarbon having from 3 to 7 carbon atoms and said washing is effected under conditions such that said hydrocarbon remains in liquid phase.

16. The method of claim 15 characterized in that said washing hydrocarbon is selected from pentane, heptane, and mixtures thereof.

17. The method of claim 13 characterized in that said at least one monomer is selected from 1-olefins having from 2 to 20 carbon atoms.

18. The method of claim 13 characterized in that said at least one monomer is propylene, said alkyl monomether of a glycol is a monobutyl ether of diethylene glycol and said alkylene oxide is 1,2-propylene oxide.

**Patentansprüche**

1. Verfahren zur Verminderung der Katalysatorrückstände in Polyolefinen, die durch Polymerisation von 1-Olefinen und/oder konjugierten Diolefinen in Gegenwart eines Halogen enthaltenden Katalysatorsystems hergestellt wurden, durch In-Berührungbringen des Polymers mit einem Behandlungsmittel, das in Kombination ein mindestens eine Oxirangruppe der Struktur

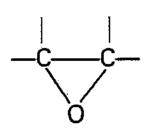

enthaltendes Alkylenoxid und einen Alkohol enthält, dadurch gekennzeichnet, daß als Alkohol ein Alkylmonoäther eines Glykols mit mindestens 3 Kohlenstoffatomen in der Alkylgruppe eingesetzt wird, wobei die Menge des Alkylenoxids mindestens 0,5 Grammol pro Grammatom des gesamten Chlorids in dem eingebrachten Katalysatorsystems und die Menge des Alkylmonoäthers eines Glykols mindestens 0,1 Grammol pro Grammatom des gesamten Metalls in dem eingebrachten Katalysatorsystem beträgt.

2. Verfahren nach Anspruch 1, dadurch gekennzeichnet, daß das Glykol die allgemeine Formel

$$HO[(CH_2)_rCHR^1O]_sH$$

hat, worin $R^1$ Wasserstoff oder eine Methylgruppe, r eine der ganzen Zahlen 1 oder 2 und s eine der ganzen Zahlen 1, 2 oder 3 ist.

3. Verfahren nach Anspruch 1, dadurch gekennzeichnet, daß das Glykol aus Ethylenglykol, Diethylenglykol, Triethylenglykol, Propylenglykol und Dipropylenglykol ausgewählt wird, der Alkylmonoäther 4 bis 8 Kohelnstoffatome enthält und von linearer oder verzweigter Natur ist und das Alkylenoxid 2 bis 8 Kohlenstoffatome aufweist und die allgemeine Formel

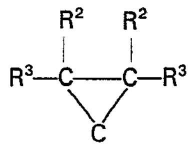

hat, worin $R^2$ und $R^3$ je ein Wasserstoffatom, eine Alkyl-, Cycloalkyl- oder Arylgruppe oder Kombination davon oder eine Epoxyenthaltende cyclische oder alicyclische Kohlenwasserstoffgruppe bedeuten, und worin die $R^2$- und/oder die $R^3$-Gruppen zur Bildung einer carbocyclischen Gruppe verbunden sein können.

4. Verfahren nach Anspruch 1, dadurch gekennzeichnet, daß der Alkylmonoäther eines Glykols aus Monobutyl-, Mono-2-ethyl-hexyl- und Monooctyläthern des Ethylenglykols und Propylenglykols, den Monobutyl-, Mono-2-ethylbutyl-, Mono-2-ethylhexyl- und Monooctyläthern des Dihydroxydiethyläthers (Diethylenglykol) und Dipropylen-1,2-glykols und den Monobutyläthern des Triethylenglykols ausgewählt wird.

5. Verfahren nach Anspruch 1, dadurch gekennzeichnet, daß der Alkylmonoäther ein Monoalkyläther von Diethylenglykol ist.

6. Verfahren nach Anspruch 1, dadurch gekennzeichnet, daß der Alkylmonoäther der Monobutyläther von Diethylenglykol ist.

7. Verfahren nach Anspruch 1, dadurch gekennzeichnet, daß das Alkylenoxid aus Epoxyethan, 1,2-Epoxypropan, 1,2-Epoxybutan, 2,3-Epoxybutan, 1,2,3,4-Diepoxybutan, 1,2,4,5-Diepoxypentan, 1,2,4,5,7,8-Triepoxyoctan, 2,3-Epoxy-2,3-dimethylbutan, 2,3-Epoxy-2-methyl-3-ethyl-pentan, Epoxyethylbenzol, Epoxyethylcyclohexan, Epoxyethyl-3,4-epoxycyclohexan, 1,2-Epoxycyclohexan, 2,3-Epoxyethylcyclohexan und 1,2-Epoxycyclopentan ausgewählt wird.

8. Verfahren nach Anspruch 6, dadurch gekennzeichnet, daß das Alkylenoxid 1,2-Epoxypropan ist.

9. Verfahren nach einem der Ansprüche 1 bis 8, dadurch gekennzeichnet, daß der Alkylmonoäther in einer Menge von 0,1 bis 15 Gramm-mol pro Grammatom des gesamten Metalls in dem Katalysatorsystem, des Alkylenoxid in einer Menge von 0,5 bis 20 Grammol pro Grammatom Halogen in dem Katalysatorsystem und der Alkylmonoäther eines Glykols zu dem Alkylenoxid in einem Verhältnis im Bereich von 0,1:1 bis 10:2 vorliegt, wobei das Verhältnis als das Verhältnis der Mole des pro Grammatom des gesamten Metalls in dem eingebrachten Katalysatorsystem verwendeten Alkylmonoäthers zu den Molen des pro Grammatom des Halogenids in dem eingebrachten Katalysatorsystem verwendeten Alkylenoxids bereichnet wird.

10. Verfahren nach Anspruch 9, dadurch gekennzeichnet, daß der Alkylmonoäther in einer Menge von 1,5 bis 6 Grammol pro Grammatom des gesamten Metalls in dem Katalysatorsystem vorliegt.

11. Verfahren nach Anspruch 9, dadurch gekennzeichnet, daß der Alkylenmonoäther eines Glykols zu dem Alkylenoxid in einem Molverhältnis im Bereich von 0,1:1 bis 4:1 vorliegt.

12. Verfahren nach Anspruch 9, dadurch gekennzeichnet, daß der Alkylmonoäther eines Glykols zu dem Alkylenoxid in einem Molverhältnis im Bereich von 0,2:1 bis 3:1 vorliegt.

13. Verfahren nach einem der Ansprüche 1 bis 12, dadurch gekennzeichnet, daß zunächst das Polyolefin als ein fein verteilter Feststoff in einem Kohlenwasserstoffverdünnungsmittel, ausgewählt aus zumindest einem vorerwähnten Monomer, unter solchen Bedingungen, daß das Kohlenwasserstoffverdünnungsmittel in flüssiger Phase vorliegt, dispergiert wird, dann das so dispergierte Polyolefin mit dem Behandlungsmittel in Berührung gebracht wird und schließlich das gereinigte Polyolefin aus der Aufschlämmung abgetrennt wird, um fein verteilte Polyolefinteilchen zu erhalten.

14. Verfahren nach Anspruch 13, dadurch gekennzeichnet, daß die fein verteilten Polyolefinteilchen durch In-Berührung-bringen derselben im Gegenstrom mit einer Kohlenwasserstoffwaschflüssigkeit, in welcher ein aus dem Behandlungsmittel und den Katalysatorrückständen gebildeter Komplex löslich ist, gewaschen und das gewaschene Polyolefin zurückgewonnen wird.

15. Verfahren nach Anspruch 14, dadurch gekennzeichnet, daß die Kohlenwasserstoffwaschflüssigkeit ein Kohlenwasserstoff mit 3 bis 7 Kohlenstoffatomen ist und das Waschen unter solchen Bedingungen erfolgt, daß der Kohlenwasserstoff in flüssiger Phase bleibt.

16. Verfahren nach Anspruch 15, dadurch gekennzeichnet, daß die Kohlenwasserstoffwaschflüssigkeit aus Pentan, Heptan und Mischungen davon ausgewählt wird.

17. Verfahren nach Anspruch 13, dadurch gekennzeichnet, daß das zumindest eine Monomer aus 1-Olefinen mit 2 bis 20 Kohlenstoffatomen ausgewählt wird.

18. Verfahren nach Anspruch 13, dadurch gekennzeichnet, daß das zumindest eine Monomer Propylen, der Alkylmonoäther eines Glykols ein Monobutyläther des Diethylenglykols und das Alkylenoxid 1,2-Propylenoxid ist.

**Revendications**

1. Procédé de réduction du taux de résidus de catalyseur dans des polyoléfines préparées par polymérisation de 1'oléfines et/ou de dioléfines conjuguées en présence d'un système de catalyseur contenant un halogène en mettant en contact ce polymère avec un agent de traitement comprenant en combinaison un oxyde d'alkylène contenant au moins un groupe oxirane répondant à la formule:

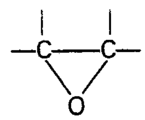

et un alcool, caractérisé en ce qu'on utilise comme cet alcool un monoéther alkylique d'un glycol ayant au moins 3 atomes de carbone dans ce groupe alkyle, dans lequel la quantité de cet oxyde d'alkylène est au moins 0,5 mole gramme par atome gramme de chlorure total dans le système de catalyseur introduit et la quantité de ce monoéther alkylique d'un glycol est d'au moins 0,1 mole gramme par atome gramme de métal total dans le système de catalyseur introduit.

2. Procédé selon la revendication 1, caractérisé en ce que ce glycol est représenté par la formule générale:

$$HO[(CH_2)_rCHR^1O]_sH$$

dans laquelle $R^1$ est l'hydrogène ou un groupe méthyle, r est un entier égal à 1 ou 2 et s est un entier égal à 1, 2 ou 3.

3. Procédé selon la revendication 1, caractérisé en ce que ce glycol est choisi parmi l'éthylèneglycol, le diéthylèneglycol, le triéthylèneglycol, le propylèneglycol, et le dipropylèneglycol, en ce que ce monoéther alkylique contient de 4 à 8 atomes de carbone et est linéaire ou ramifié, et en ce que cet oxyde d'alkylène a de 2 à 8 atomes de carbone et est représenté par la formule générale:

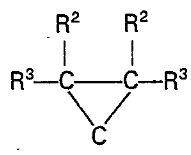

dans laquelle $R^2$ et $R^3$ sont un atome d'hydrogène, un groupe alkyle, cycloalkyle ou aryle ou une combinaison de ceux-ci, ou un groupe hydrocarboné cyclique ou alicyclique contenant un époxy, et dans lequel les groupes $R^2$ et/ou $R^3$ peuvent être réunis pour former un groupe carbocyclique.

4. Procédé selon la revendication 1, caractérisé en ce que ce monoéther alkylique d'un glycol est choisi parmi les éthers monobutyliques, mono-2-éthyl-hexyliques et monooctyliques de l'éthylèneglycol et du propylèneglycol, les éthers monobutyliques, mono-2-éthylbutyliques, mono-2-éthylhexyliques et monooctyliques de l'éther dihydroxydiéthylique (diéthylèneglycol) et du dipropylène-1,2-glycol, et les éthers monobutyliques du triéthylèneglycol.

5. Procédé selon la revendication 1, caractérisé en ce que ce monoéther alkylique est un éther monoalkylique du diéthylèneglycol.

6. Procédé selon la revendication 1, caractérisé en ce que ce monoéther alkylique est l'éther monobutylique du diéthylèneglycol.

7. Procédé selon la revendication 1, caractérisé en ce que cet oxyde d'alkylène est choisi parmi l'époxyéthane, le 1,2-époxypropane, le 1,2-époxybutane, le 2,3-époxybutane, le 1,2,3,4-diépoxybutane, le 1,2,4-diépoxypentane, le 1,2,4,5,7,8-triépoxyoctane, le 2,3-époxy-2,3-diméthylbutane, le 2,3-époxy-2-méthyl-3-éthylpentane, l'époxyéthylbenzène, l'époxyéthylcyclohexane, l'époxyéthyl-3,4-époxycyclohexane, le 1,2-époxycyclohexane, le 2,3-époxyéthylcyclohexane et le 1,2-époxycyclopentane.

8. Procédé selon la revendication 6, caractérisé en ce que cet oxyde d'alkylène est le 1,2-époxypropane.

9. Procédé selon l'une quelconque des revendications 1 à 8, caractérisé en ce que ce monoéther alkylique est présent dans une quantité de 0,1 à 15 moles gramme par atome gramme de métal total dans ce système de catalyseur, en ce que cet oxyde d'alkylène est présent dans une quantité de 0,5 à 20 moles gramme par atome gramme d'halogène dans ce système de catalyseur, et en ce que ce monoéther alkylique d'un glycol a un rapport relatif à cet oxyde d'alkylène dans l'intervalle de 0,1:1 à 10:2 dans lequel ce rapport est calculé comme le rapport de moles de ce monoéther alkylique utilisé par atome gramme de métal total dans ce système de catalyseur introduit aux moles de cet oxyde d'alkylène utilisé par atome gramme d'halogénure dans ce système de catalyseur introduit.

10. Procédé selon la revendication 9, caractérisé en ce que ce monoéther alkylique est présent dans une quantité de 1,5 à 6 moles gramme par atome gramme de métal total dans ce système de catalyseur.

11. Procédé selon la revendication 9, caractérisé en ce que ce monoéther alkylique d'un glycol a un rapport molaire par rapport à cet oxyde d'alkylène dans l'intervalle de 0,1:1 à 4:1.

12. Procédé selon la revendication 9, caractérisé en ce que ce monoéther alkylique d'un glycol a un rapport molaire par rapport à cet oxyde d'alkylène dans l'intervalle de 0,2:1 à 3:1.

13. Procédé selon l'une quelconque des revendications 1 à 12, caractérisé en ce qu'on disperse d'abord cette polyoléfine sous la forme d'un solide finement divisé dans un diluant hydrocarboné choisi parmi ce au moins un monomère dans des conditions telles que ce diluant hydrocarboné soit en phase liquide, puis

en ce qu'on met en contact la polyoléfine ainsi dispersée avec cet agent de traitement, et enfin en ce qu'on sépare la polyoléfine purifiée de la bouillie pour obtenir des particules de polyoléfine finement divisées.

14. Procédé selon la revendication 13, caractérisé en ce qu'on lave ces particules de polyoléfine finement divisées en les mettant en contact à contre-courant avec un hydrocarbure de lavage dans lequel un complexe formé à partir de cet agent de traitement et des résidus de catalyseur est soluble, et en ce qu'on récupère la polyoléfine lavée.

15. Procédé selon la revendication 14, caractérisé en ce que cet hydrocarbure de lavage comprend un hydrocarbure ayant de 3 à 7 atomes de carbone et en ce que ce lavage est effectué dans des conditions telles que cet hydrocarbure reste en phase liquide.

16. Procédé selon la revendication 15, caractérisé en ce que cet hydrocarbure de lavage est choisi parmi le pentane, l'heptane et des mélanges de ceux-ci.

17. Procédé selon la revendication 13, caractérisé en ce que cet au moins un monomère est choisi parmi les 1-oléfines ayant de 2 à 20 atomes de carbone.

18. Procédé selon la revendication 13, caractérisé en ce que cet au moins un monomère est le propylène, ce monoéther alkylique d'un glycol est un éther monobutylique du diéthylèneglycol et en ce que cet oxyde d'alkylène est l'oxyde de 1,2-propylène.